# EUROPEAN PATENT SPECIFICATION

(11) **EP 3 458 171 B1**
(45) Date of publication and mention of the grant of the patent: **08.01.2025**
(21) Application number: 17799995.0
(22) Date of filing: 16.05.2017
(51) Int. Cl.: B01D 17/04, B01D 17/00, B01D 17/02, B01D 17/05, C10G 33/00, C02F 1/24, C10G 1/04, C02F 9/00

(54) **METHODS OF AFFECTING SEPARATION**
VERFAHREN ZUR BEEINFLUSSUNG DER TRENNUNG
PROCÉDÉS PERMETTANT D'INFLUER SUR LA SÉPARATION

(30) Priority: 17.05.2016 US 201662337431 P
(43) Date of publication of application: 27.03.2019
(73) Proprietor: Nano Gas Technologies, Inc., Deerfield, IL 60015 (US)
(72) Inventor: FOLDS, Rudy, M., Deerfield, IL 60015 (US); FIEDLER, Scott, A., Deerfield, IL 60015 (US); HARDIN, Jeffrey, K., Deerfield, IL 60015 (US)
(74) Representative: Herrero & Asociados, S.L.
(86) International application number: PCT/US2017/032858
(87) International publication number: WO 2017/201016

(56) References cited:
- WO-A1-2013/129159
- WO-A1-2015/073345
- CN-B- 102 218 275
- US-A- 2 503 528
- US-A- 3 913 673
- US-A- 4 783 268
- US-A- 5 935 447
- US-A1- 2010 104 744

## Description

### FIELD OF THE INVENTION

This disclosure is directed to methods of affecting the viscosities of oils for the separation of these oils from emulsions.

### BACKGROUND

Subsurface geological operations such as mineral mining, oil well drilling, natural gas exploration, and induced hydraulic fracturing generate wastewater contaminated with significant concentrations of impurities. These impurities vary widely in both type and amount depending on the type of geological operation, the nature of the subsurface environment, and the type and amount of soluble minerals present in the native water source. The contaminated water is eventually discharged into surface waters or sub-surface aquifers. In some cases, wastewater generated from drilling and mining operations have resulted in making regional water supplies unusable. Induced hydraulic fracturing in particular is a highly water-intensive process, employing water pumped at pressures exceeding 21 MPa (3,000 psi) and flow rates exceeding 322 litres per minute (85 gallons per minute) to create fractures in subsurface rock layers. These created fractures intersect with natural fractures, thereby creating a network of flow channels to a well bore. These flow channels allow the release of petroleum and natural gas products for extraction. The flow channels also allow the injected water plus additional native water to flow to the surface along with the fuel products once the fractures are created.

Flowback water, and produced water, from subsurface geological operations contains a variety of contaminants. Often, produced water is "hard" or brackish and further includes dissolved or dispersed organic and inorganic materials. Produced water can include chemicals used in the mining operation, such as hydrocarbons that are injected along with water to facilitate fracture formation in hydrofracturing. One common type of contaminant present in produced water from hydrofracturing is a mixture of free and emulsified oil together with gel-like accumulations of hydrocarbons. In most cases, this oily mixture further contains silt, sand, and/or clay particulates gathered by the produced water as it travels to the surface. These oily mixtures are neutrally buoyant- that is, they neither sink nor float, or they require extended times to sink or float- in produced water. While in some cases these oily mixtures are visible as agglomerated, black, and tarry-looking residues, in other cases the oily mixtures, or some portion thereof, are finely divided dispersed liquids or liquid/solid droplets or particles present throughout the water phase.

Conventional oil separation processes relying on density differences are incapable of effectively separating this oily mixture from produced water. Conventional filtering methods employ screen or filter media that are quickly clogged by the oily mixture. Gravity separation is not only slow but also requires the use of large tanks and low flow rates in order to provide the long residence times needed to achieve an effective separation. Even with very long residence times, very well dispersed, fine oily mixture droplets are sometimes inseparable from the water phase. Methods such as evaporation of water from the mixture are not only time intensive, but highly energy intensive as well, and impractical for mining operations where large volumes of produced water are generated in short periods of time. Some filtering methods, such as disclosed in WO 2013/129159 A1, oxidize the emulsified oil in the water to be treated, which causes the emulsified oil to aggregate and float to the top of a flocculation tank as non-oily dry scum. Although these oxidation methods facilitate removal of contaminants with the emulsified oil, they do not allow for the recovery of the emulsified oil. Thus, current processes for removing such material suffer many drawbacks.

Further remediation of produced water is only possible once this oily mixture is removed. Therefore, there is a need for a process for effectively removing neutrally buoyant materials from water. For example, in the mining industry, there is a need for a process to effectively remove an oily mixture from produced water in an efficient manner to result in produced water that is substantially free of emulsified petroleum, sand, silt, clay, and gel-like hydrocarbons. There is a need to remove neutrally buoyant materials other than such oily mixtures from water. There is a need for these processes to operate without undue energy expenditure. There is a need for these processes to operate at a rate that is commensurate with water-intensive applications such as hydrofracturing.

### SUMMARY

The invention is defined in claim 1. It concerns a process comprising shearing a first nanogas solution into an oil-in-water micro emulsion; breaking the oil-in-water micro emulsion and forming a water-in-oil macro emulsion, a water phase, and a solids phase, where the water-in-oil macro emulsion is carried on the water phase; and collecting oil from the water-in-oil macro emulsion; wherein the nanogas solution consists essentially of a homogeneous mixture of nanobubbles and water.

Further embodiments of the invention are set forth in the dependent claims.

The present disclosure also includes examples which do not form part of the claimed invention.

One example, not forming part of the claimed invention, is a process that includes admixing a nanogas solution and an oil-in-water emulsion; breaking the oil-in-water emulsion; and forming an oil phase floating on a water phase; wherein the nanogas solution is a homogeneous mixture of nanobubbles and water.

Another example, not forming part of the claimed invention, is a process that includes providing a floatation tank having an inlet end and an outlet end; the floatation tank including an oil-in-water emulsion inlet and a first nanogas inlet proximal to the inlet end, and having an underflow baffle proximal to the outlet end; providing an oil-in-water emulsion to the floatation tank via the oil-in-water emulsion inlet; providing a nanogas solution to the floatation tank via the first nanogas inlet thereby admixing the nanogas solution with the oil-in-water emulsion; breaking the oil-in-water emulsion and forming an oil phase floating on a water phase; separating the water phase from the oil phase by carrying the water phase under the underflow baffle.

Still another example, not forming part of the claimed invention, is a process that includes admixing a nanogas solution an oil sand tailings; breaking the oil sands tailings into an oil phase, a water phase, and a solids phase; and separating the phases.

Yet still another example, not forming part of the claimed invention, is a process that includes providing a floatation tank having an inlet end and an outlet end; the floatation tank including an oil-in-water emulsion inlet and a first nanogas inlet, both, proximal to the inlet end, and having an underflow baffle proximal to the outlet end; providing an oil-in-water emulsion to the floatation tank via the oil-in-water emulsion inlet; providing a nanogas solution to the floatation tank via the first nanogas inlet thereby admixing the nanogas solution with the oil-in-water emulsion without the formation of macrobubbles; breaking the oil-in-water emulsion and forming an oil phase floating on a water phase; and separating the water phase from the oil phase by carrying the water phase under the underflow baffle.

Still yet another example, not forming part of the claimed invention, is a method that includes admixing a nanogas solution with oil sands tailings; and separating materials including silts, residual bitumen, and organic compounds from water in the oil sands tailings; wherein the nanogas solution is a nitrogen-nanogas solution or an ON-nanogas solution.

Another example, not forming part of the claimed invention, is a method that includes admixing an oxygen-nanogas solution or an ON-nanogas solution with an aqueous solution that includes hydrogen sulfide; and oxidizing the hydrogen sulfide.

Yet another example, not forming part of the claimed invention, is a method that includes admixing an oxygen-nanogas solution or an ON-nanogas solution with a slurry of iron sulfide and water; and oxidizing the iron sulfide to iron oxide.

### BRIEF DESCRIPTION OF THE FIGURES

For a more complete understanding of the disclosure, reference should be made to the following detailed description and accompanying drawing figures wherein:
Figure 1 is a process diagram of a process described herein; and
Figure 2 is a cross section of a separation tank showing the inflow and outflow of agents.

While specific embodiments are illustrated in the figures, with the understanding that the disclosure is intended to be illustrative, these embodiments are not intended to limit the invention described and illustrated herein.

### DETAILED DESCRIPTION

A first embodiment is a process of breaking an oil-in-water emulsion. As used throughout, emulsions are oil-in-water emulsions. The process can include admixing a nanogas solution and an emulsion; breaking the emulsion; and forming an oil phase floating on a water phase. Preferably, the emulsion can be flow back water, produced water, or oil sands tailing water. In other examples, the emulsion can be mayonnaise, butter, or a palm oil-in-water emulsion.

Notably, the nanogas solution is a homogeneous mixture of nanobubbles and water. As used herein, the term "nanobubbles" means bubbles of a gas within a liquid, wherein the bubbles having an average diameter of about 10 nm to 100 nm; preferably, wherein there are no bubble having a diameter of greater than about 500 nm, about 400 nm, about 300 nm, about 250 nm, or about 200 nm, more preferably, there are no microbubbles. The herein utilized nanobubbles can be formed in or by a nanogas solution generator, one example of which is provided in US 9,586,176. Additional means for forming the herein utilized nanobubbles include those machines and methods described in 8,500,104.

The nanogas solution is homogeneous, that is, the nanobubbles are evenly distributed throughout the solution and appear as a suspended "particulate" in the liquid. Notably, the liquid may further be saturated with or near saturation with the gas that comprises the nanobubbles. A mixture of bubbles and liquid wherein the bubbles coalesce and/or rise to the surface and break is not a homogeneous mixture of nanobubbles and the liquid.

The homogeneous mixture can include nanobubbles that include, consist essentially of, or consist of oxygen (O₂), nitrogen (N₂), carbon dioxide (CO₂), or a mixture thereof; and can include a liquid that is water, for example, distilled water, di-water, ground water, municipal water, collected water, or recycled water. As used herein, the terms oxygen and nitrogen refer to the gasses O₂ and N₂ whether or not the term oxygen gas or nitrogen gas is used.

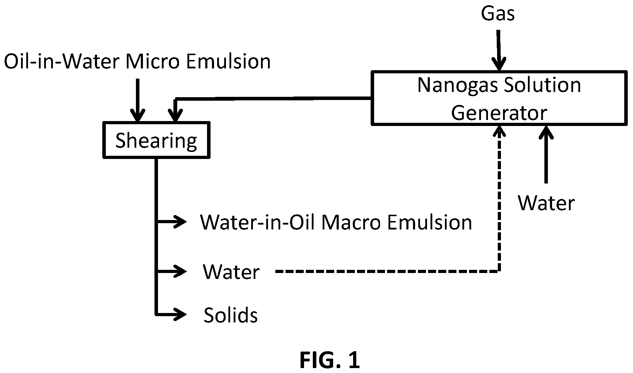

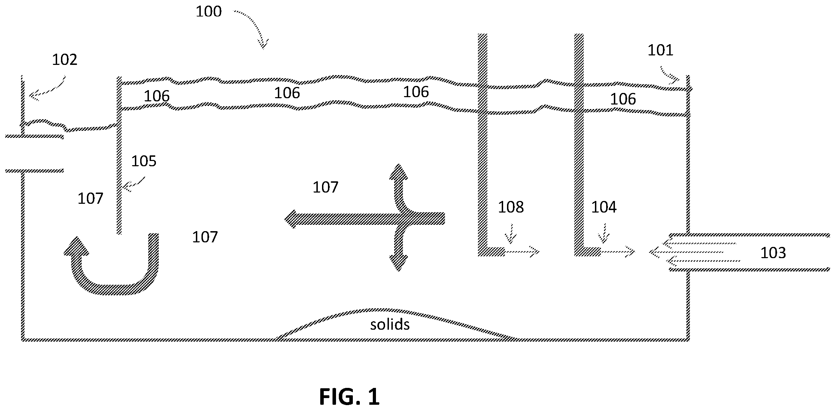

In one instance, the homogeneous mixture includes collected water; as used herein collected water means the water that has been used in the oil industry for the hydraulic fracturing of subterranean formations, well stimulation or treatment, specifically water that has been collected from a subterranean use. In another instance, the homogeneous mixture includes recycled water, as used herein recycled water means the water has been passed through the herein disclosed process of breaking an emulsion. Fig 1 shows a schematic of a general process of breaking the emulsion. Notably, the dashed lines denote the optional use of the water separated from the emulsion as the feed water or generator water for the nanogas solution (feeding into a nanogas solution generator).

In yet another instance the homogeneous mixture (i.e., the nanogas solution) includes oxygen, nitrogen, carbon dioxide, or a mixture thereof. In one example, the nanogas solution is a nitrogen-nanogas solution wherein the solution includes, consists essentially of, or consists of nitrogen (N₂) and the water. Herein, the term consists essentially of refers to the inclusion of salts, gases, or solutes that may occur in the water (liquid) but have no effect on the performance of the nanogas solution in the herein disclosed processes. Notably, unless rigorously cleaned and degassed, water will always include some concentration of contaminants (solutes and gases). Furthermore, the term consisting essentially of includes the use of recycled water for the formation of the nanogas solution; in this instance, the solution will consist of the gas, water (H₂O), and minor concentrations of compounds found in the emulsion from which the recycled water was obtained. Herewith, the nanogas solution preferably consists essentially of the gas and water, wherein the contaminants in the water do not affect the performance of the solution. In another example, the nanogas solution is an oxygen-nanogas solution wherein the solution includes, consists essentially of, or consists of oxygen and water. In still another example, the nanogas solution is a ON-nanogas solution wherein the solution includes, consists essentially of, or consists of oxygen, nitrogen, and water. Herein, an ON-nanogas includes molar ratios of oxygen to nitrogen of 99:1 to 1:99, for example 99:1, 90:1, 80:1, 70:1, 60:1, 50:1, 40:1, 30:1, 20:1, 10:1, 1:1, 1:10, 1:20, 1:30, 1:40, 1:50, 1:60, 1:70, 1:80, 1:90, and 1:99. Preferred molar ratios include about 18:82, 21:79, 28:72, 30:70, 32:68, 35:65, 40:60, 42:58, and 50:50. Other particularly relevant molar ratios can be selected from 50:50; 60:40; 70:30; and 80:20. In yet still another example, the nanogas solution includes carbon dioxide wherein the solution includes, consists essentially of, or consists of carbon dioxide and water, more preferably a mixture of carbon dioxide, nitrogen, and water.

In one example, the process includes admixing a nitrogen-nanogas solution with the emulsion. Preferably, the process includes breaking the emulsion and forming (and separating) a water phase and a nitrogen-oil phase. Herein, the term nitrogen-oil phase is a designation of source for the material coming from the treatment of the emulsion with the nanogas solution. In some examples, the nitrogen-oil phase includes nitrogen gas. In one example, the emulsion is an emulsion of a crude oil and water (e.g., a produced water, flow back water, or oil sands tailing water) and, from the admixing of this emulsion with the nitrogen nanogas solution is, preferably, separated a light crude oil (a crude oil having a density lower than 0.87 kg/m³ (API gravity of higher than 31.1°). More preferably, the emulsion is an emulsion of heavy (density higher than 0.92 kg/m³ (API Z gravity of less than 22.3°)) and/or medium (0.92 to 0.87 kg/m³ (22.3° to 31.1 °)) crude oil in water and the process provides a water phase and a nitrogen-oil phase. The nitrogen-oil phase can be a light oil phase, a medium oil phase, or a heavy oil phase; notably, the nitrogen-oil phase is preferably an admixture of water, oil, and gas that floats on the water phase. In specific examples, the nitrogen-oil can be separated from the water phase (for example, by overflow of a separation weir). The water retained in the nitrogen oil phase can then be removed (e.g., by cyclone separation, emulsion breaking, or absorption) leaving the oil phase. The isolated oil phase can be a heavy or medium oil. That is, the admixing of the nitrogen-nanogas solution with the emulsion, breaks the emulsion and carries a nanogas-oil phase on a water phase, the nanogas-oil phase can be separated and dried to leave a heavy oil. Unexpectedly, the nitrogen-oil phase has been separated and dried of residual water, leaving an oil having a density of about 1.01 to 1.00 kg/ m³ (an API gravity of about 8-10). That is, the process can separate carry and separate very heavy oil from produced water or oil sands tailings.

In one example, the nitrogen-nanogas solution can include, consist essentially of, consist of nanobubbles that include at least 80%, 90%, or 95% nitrogen and water. Preferably, the nitrogen-nanogas solution consists of nitrogen nanobubbles and water wherein the nitrogen nanobubbles include at least 90%, or at least 95% nitrogen gas. The process, preferably, further includes separating an underlying water phase and the nitrogen-oil phase (which floats on the water phase). The underlying water phase can be recycled for the preparation of a nanogas solution; the nitrogen-oil phase is, preferably, recovered and can be processed (e.g., pumped to storage facilities).

The process can further include separating a precipitate or solid from the water phase. In one example, the addition of the nitrogen-nanogas solution to the emulsion provides a tri-phase or three component mixture of a nitrogen-oil phase, a water phase, and a precipitate. For example, emulsion can include bitumen, iron sulfide, shale, sand, and/or other subterranean component (herein subterranean components means materials other than water and oil that are carried to the surface during hydrocarbon extraction). In this example, the subterranean component (including bitumen, iron sulfide, shale, sand, and other materials) is the precipitate. That is, the process can break both the emulsion (separating oil and water) but can contemporaneously separate solid subterranean components from the oil droplet.

In another example, the process includes admixing an oxygen-nanogas solution with the emulsion providing an oxygen-oil phase. Preferably, the oxygen-nanogas solution includes oxygen nanobubbles composed of at least 80%, 90%, or 95% oxygen. Preferably, the nanogas solution consists essentially of, more preferably consists of oxygen nanobubbles and water wherein the oxygen nanobubbles includes at least 90%, or at least 95% oxygen. Preferably, the process includes breaking the emulsion and forming (and separating) a water phase and an oxygen-oil phase. Herein, the term oxygen-oil phase is a designation of source for the material coming from the treatment of the emulsion with the nanogas solution, in some examples the oxygen-oil phase includes oxygen gas (O₂). In one example, the emulsion is an emulsion of a crude oil and water (e.g., a produced water, flow back water, or oil sands tailing water) and, from the admixing of this emulsion with the oxygen nanogas solution is, preferably, separated a crude oil. As distinct from the addition of the nitrogen-nanogas solution as described above, the addition of the oxygen-nanogas solution to the emulsion provides the separation of a medium or heavy crude oil. Even more typically, the addition of the oxygen-nanogas solution provides the separation of an agglomerated oil mixture (which can include water) that does not freely flow but can float on water.

In one example, the oxygen-nanogas solution can include, consist essentially of, consist of nanobubbles that include at least 80%, 90%, or 95% oxygen and water. Preferably, the oxygen-nanogas solution consists of oxygen nanobubbles and water wherein the oxygen nanobubbles include at least 90%, or at least 95% oxygen gas. The process, preferably, further includes separating an underlying water phase and the oxygen-oil phase (which floats on the water phase). The underlying water phase can be recycled for the preparation of a nanogas solution; the oxygen-oil phase is, preferably, recovered and can be processed (e.g., pumped to storage facilities).

In another preferable instance, the process includes reducing a concentration of hydrogen sulfide in the emulsion or in a separated water phase. Preferably wherein the hydrogen sulfide concentration is reduced to a level below about 10 ppm, 5 ppm, or 1 ppm. The reduction of the hydrogen sulfide concentration can include the formation of sulfite and sulfate species in the water. In one example, the addition of the oxygen-nanogas solution to the emulsion or the separated water provides a sufficient concentration of oxygen that the hydrogen sulfide is oxidized. In another example, the addition of the oxygen-nanogas solution to a mixture of hydrogen sulfide and water oxidizes the sulfide to a sulfite and/or sulfate. Preferably, the sulfide (S²⁻) is oxidized to sulfite (SO₃²⁻) and/or sulfate (SO₄²⁻) in water (e.g., the H₂S or X(SH) oxidized to hydrogen sulfite, hydrogen sulfate, or the salts thereof). In certain examples, the emulsion (or the water solution) includes ions or agents that react with and/or bind the sulfite or sulfate and precipitate this sulfur species from the solution.

In yet another preferable instance, the process can include reducing a concentration of iron in the emulsion; affecting the separation of iron from water; and/or oxidizing iron sulfide (e.g., FeS), for example, to reduce any likelihood pyrophoric actions upon removal. Notably, flow back water, produced water, or oil sands tailing water can include a concentration of iron sulfide, typically FeS. In one example, the majority (preferably all) of the iron sulfide can be separated from an emulsion by the addition of a nitrogen nanogas solution; this process breaks the emulsion and precipitates the iron sulfide. In some instances, portions of the iron sulfide may stay suspended in the water phase; in these instances, the addition of an oxygen nanogas solution provides an admixture that can be filtered without irreversibly clogging filter membranes or screens. In another example, the iron sulfide concentration in the water phase is reduced to a level below about 10 ppm, 5 ppm, or 1 ppm. Preferably, the addition of the oxygen nanogas solution provides an admixture that can be filtered and the filter screen back washed. Notably, the iron sulfide suspended in the solution without the addition of the oxygen-nanogas solution is an admixture capable of filtration but clogs the screens and cannot be backwashed. In one example, the addition of an oxygen-nanogas solution or an ON-nanogas solution to an admixture of iron sulfide and water (obtained from an emulsion) partially oxidizes the surface of the iron sulfide, decreases the adhesion of oil to the surface of this oxidized material, and permits for the more facile filtration. In another example, the iron sulfide can be oxidized to iron oxide (Fe₂O₃ or FeO). Herein, an oxygen-nanogas solution can be added to an admixture of water and iron sulfide; in one example the admixture of water and iron sulfide is selected from the emulsion (unseparated), a separated water phase that includes iron sulfide, or a slurry of iron sulfide and water (for example, a slurry that was previously separated from the emulsion by the addition of a nitrogen-nanogas solution; or a slurry that is the resuspension of separated iron sulfide, and optionally other materials, in water). Preferably, the iron sulfide is quantitatively converted to an iron oxide.

In still another instance, the process can include admixing an ON-nanogas solution with the emulsion. In this instance, the addition can afford the reduction of the sulfide concentration in the separated water, the reduction of the iron sulfide concentration in the separated water, a lightening of the separated oil phase, and or a mixture thereof. In one example, the nanogas solution is a ON-nanogas solution wherein the solution includes, consists essentially of, or consists of oxygen (O₂), nitrogen (N₂), and water. Herein, an ON-nanogas includes molar ratios of oxygen to nitrogen in the range of 99:1 to 1:99; examples include 99:1, 90:1, 80:1, 70:1, 60:1, 50:1, 40:1, 30:1, 20:1, 10:1, 1:1, 1:10, 1:20, 1:30, 1:40, 1:50, 1:60, 1:70, 1:80, 1:90, and 1:99. Preferred molar ratios include about 18:82, 21:79, 28:72, 30:70, 32:68, 35:65, 40:60, 42:58, and 50:50. One particularly relevant molar ratio is 21:79 (air). Other particularly relevant molar ratios can be selected from 50:50; 60:40; 70:30; and 80:20. In particular, the amount of oxygen (relative to the amount of nitrogen) can be varied to achieve different results (oxidation vs separation), and the higher the concentration of the composition that is desired to be oxidized (e.g., a sulfide) the higher the oxygen concentration can be.

In yet another instance, the process can include admixing the emulsion with a first nanogas solution. The process can then include either (A) separating the admixture into components (i.e., oil phase, water phase, and possibly solid phase) and then admixing the water phase with a second nanogas solution, or (B) prior to separating the components, adding a second nanogas solution to the first admixture. When the first admixture is a heterogeneous admixture (having at least an oil phase and a water phase), the second nanogas solution is preferably added to the water phase. In one example, the first nanogas solution is a nitrogen-nanogas solution and the second nanogas solution is an oxygen nanogas solution. In a second example, the first nanogas solution is an oxygen nanogas solution or an ON-nanogas solution and the second nanogas solution is a nitrogen-nanogas solution. In a third example the first nanogas solution is selected from the group consisting of a nitrogen-, an oxygen-, and a ON-nanogas solution; and the second nanogas has a composition that is different from the first nanogas solution and is selected from the group consisting of a nitrogen-, an oxygen-, and a ON- nanogas solution.

Preferably, the addition of the nitrogen-nanogas to the water phase forms a nitrogen-oil phase which has a viscosity that is lower than a viscosity of the oxygen-oil phase. That is, the addition of the nitrogen-nanogas solution (e.g., to the broken emulsion formed by the admixing of the oxygen-nanogas solution and an emulsion) affects a change in the oil-phase carried on the water, thereby reducing the viscosity of the oil-phase and preferably furthering a separation of the oil and water. In one instance, this can be understood as a further lightening of the oil. In another instance, the addition of the nitrogen-nanogas solution affects a separation of the oil and any subterranean components (e.g., solids). In one unexpected instance, the addition of the oxygen-nanogas solution did not affect or affected to a minor extent the separation of the subterranean components and the addition of the nitrogen-nanogas solution afforded separation or enhanced separation (beyond what is achievable with just the oxygen nanogas solution). Still further, the nitrogen-oil phase is, preferably, separated from the underlying water phase and the oil is recovered and can be processed.

The inventive process described herein includes shearing a first nanogas solution into an oil-in-water micro emulsion, and breaking the oil-in-water micro emulsion and forming a water-in-oil macro emulsion, a water phase, and a solids phase, where the water-in-oil macro emulsion is carried on the water phase. The process also includes collecting oil from the water-in-oil macro emulsion. Here, the nanogas solution consists essentially of a homogeneous mixture of nanobubbles and water.

In one instance, shearing means contacting the nanogas solution and the oil-in-water micro emulsion in such a way that the oil droplets in the emulsion are disrupted, in one case made even smaller. In another instance, shearing means injecting the nanogas solution between a double layer boundary of the oil droplets in the micro emulsion. The shearing can involve providing a flow of the oil-in-water micro emulsion and injecting a stream of the first nanogas solution into the micro emulsion flow at a direction that is 90° to 180° from the flow, preferably 115° to 180°, more preferably 135° to 180°. Preferably, the nanogas solution is injected as a stream with sufficient pressure to provide turbulence and shear in the micro emulsion flow. In one preferable instance, a plurality of nanogas solution streams are injected into the micro emulsion flow path at angles ranging from 115° to 180° using a nozzle or tube. Preferably, the nozzle or tube does not constrict at its termination as this constriction can disrupt the nanogas solution and promote macrobubble formation. In another preferable instance, the plurality of nanogas solution streams intersect in the micro emulsion flow path. In another instance, the nanogas solution and the micro emulsion can be intermixed in a volume ("mixer") that can carry both materials. Examples of a mixer can include a pipe carrying the micro emulsion or can include shearing mixers or mixing containers (e.g., rotostator mixers). This sheared admixture is then preferably ejected (transferred) into a separation container (e.g., a floatation tank, a drum, a pond).

The process can also include separating the water phase from the water-in-oil macro emulsion and the solids. Notably, the separated water phase can include nanobubbles; that is, the concentration of nanobubbles in the sheared admixture is sufficiently high that the nanobubbles are not consumed or absorbed into the water-in-oil emulsion. This separated water, if containing a sufficient concentration of nanobubble can be used as a nanogas solution (e.g., sheared into an oil-in-water emulsion to provide the benefits described herein). Preferably, a portion of the separated water is recycled and used to provide the first nanogas solution (e.g., by addition to a machine or process for the manufacture of a nanogas solution).

In another instance, the oil-in-water micro emulsion can include a number of emulsifiers that promote or stabilize the emulsion. Notably, when the emulsion is the result of, for example, the petroleum industry, the micro emulsion can include emulsifiers selected from solids, asphaltenes, paraffins, resins, and mixtures thereof. Typically, these emulsifiers are distributed at the interface between the oil droplets and the water, stabilizing the oil droplets, preventing them from agglomerating, and thereby stabilizing the emulsion. Notably, these emulsifiers increase the zeta-potential of the oil droplets to prevent the agglomeration and separation of the oil. In one case, where the first nanogas solution is an oxygen-nanogas solution; the process involves absorbing oxygen nanobubbles into the emulsifiers, reducing the zeta potential of an oil droplet, and forming an admixture that includes a coagulum. Herein, the coagulum is an oil-in-water macro emulsion; that is, the oxygen nanobubbles act as a chemical coagulant without the addition of traditional coagulants. In this case, the macro-emulsion may float or separate from the water but generally includes a high proportion of water to oil. Accordingly, the process preferably also includes admixing a second nanogas solution with the admixture that includes the coagulum. Here, this second nanogas solution is a nitrogen-nanogas solution which dissociates the emulsifiers from a surface of oil droplets in the oil-in-water macro emulsion, breaks the oil-in-water emulsion, and forms the water-in-oil macro emulsion.

Notably, the addition of a nitrogen-nanogas solution in the current process has been found to support a process that includes dissociating the emulsifiers from a surface of oil droplets in the oil-in-water macro emulsion; breaking the oil-in-water emulsion; and forming the water-in-oil macro emulsion. In one case, the nitrogen nanobubbles disrupt the emulsifiers from the oil droplets and allow the oil to demulsify (e.g., group into larger drops). Notably, the addition of the nitrogen-nanogas solution in the current process separates a large percentage (e.g., greater than 50 wt.%) of solids from the oil droplets causing these solids to precipitate or settle from the solutions.

In one preferable case, the first nanogas solution can include carbon dioxide and nitrogen; that is, nanobubbles of carbon dioxide and nitrogen (either as admixtures or separate nanobubbles). This case can include the absorption of the carbon dioxide (from the nanobubbles) into oil droplets (e.g., providing an oil-carbon dioxide composition). Preferably, the oil-carbon dioxide composition (carbon dioxide absorbed oil droplet) has a density that is less than the density of the oil droplet without the carbon dioxide. In this case, the separation of the components of the emulsion can provide an water-in-oil macro emulsion which includes carbon dioxide in the oil.

In another case, the oil-in-water micro emulsion might include a concentration of sulfides greater than 50 ppm, the sulfides selected from iron sulfide, hydrogen sulfide, and a mixture thereof. This process can include either (a) the first nanogas solution includes a sufficient quantity of oxygen nanobubbles to react completely with the concentration of sulfides in the oil-in-water emulsion, thereby reducing the sulfide concentration to less than 10 ppm, or (b) the process further includes admixing a second nanogas solution with the water phase, wherein the sulfides of the oil-in-water micro emulsion are carried into the water phase, and where the second nanogas solution includes a sufficient quantity of oxygen nanobubbles to react completely with the concentration of sulfides in the water phase, thereby reducing a sulfide concentration to less than 10 ppm.

Notably, the embodiments provided herein proceed without the formation of macrobubbles. In one case, the first nanogas solution does not form macrobubbles. Preferably, none of the nanogas solutions utilized herein form or include macrobubble (i.e., any bubble larger than a nanobubble). Preferably, the water-in-oil macro emulsion (separated from the micro emulsion) further does not include macrobubbles. In one instance, the water-in-oil macro emulsion includes greater than about 50 wt.% oil, less than about 50 wt.% water, and further includes nanobubbles.

In another embodiment, the process of breaking the emulsion can be utilized to continuously or batch wise separate oil from water. For example, the process can be used to separate oil from water in oil field produced water, collected water, or catch basins. More preferably, the process can be used to reduce the hydrocarbon content of a water and facilitate reuse or disposal. In one instance (e.g., as shown in Fig 2) the process can utilize a floatation tank 100 for the oil and water separation. The floatation tank 100 can have an inlet end 101 and an outlet end 102; an emulsion inlet 103 and a first nanogas inlet 104 proximal to the inlet end 101 and an underflow baffle 105 proximal to the outlet end 102. Examples of floatation tanks include DAF tanks and API tanks. Preferably, the floatation tank is a circular or rectangular DAF tank; more preferably the floatation tank is a rectangular tank that provides at least 5 minutes, 10 minutes, 15 minutes, or 20 minutes of residency time in the tank.

The process can include providing an emulsion to the floatation tank 100 via the emulsion inlet 103. The emulsion can be a produced water or collected water from a well operation. The process can additionally include providing a nanogas solution to the floatation tank via the first nanogas inlet 104. The process further includes admixing the nanogas solution with the emulsion. The admixing can be facilitated by the hydraulic flow within the floatation tank or can be further facilitated by the operation of a mixer (e.g., a paddle or propeller) within the floatation tank.

The process preferably includes breaking the emulsion and forming an oil phase 106 floating on a water phase 107. Herein, breaking the emulsion includes the coalescence of the oil "droplets" to form an oil phase (e.g., an water-in-oil emulsion) carried by the water phase.

The process can then include separating the water phase from the oil phase. Preferably, the water phase is separated by carrying the water phase 107 under the underflow baffle 105. In this instance, the oil phase is retained on the surface of the water phase. The oil phase can further be removed by an overflow or oil skimmer that can conduct the oil phase to a collection or storage apparatus.

In another instance, the floating tank 100 can include a second nanogas inlet 108 down steam from the first nanogas inlet and upstream from the underflow baffle. Herein, downstream means a position closer to the outlet end than the first nanogas inlet. Preferably, the second nanogas inlet is upstream of a midpoint between the inlet end and the outlet end. Still more preferably, the second nanogas inlet is upstream of the first quarter point between the inlet end and the outlet end. In this instance, the process can further include providing a second nanogas solution to the floatation tank via the second nanogas inlet. Thereby, the second nanogas solution is preferably admixed with the water phase carrying the oil phase, that is, the second nanogas solution is added to the floatation tank at a position or time after the emulsion breaks. Preferably, the second nanogas solution is a homogeneous mixture of nitrogen nanobubbles Yet another embodiment is a method of treating tailing water from oil sands production processes. The method can include admixing a nanogas solution and oil sands tailings; and then separating materials including silts, residual bitumen, and organic compounds from water in the oil sands tailings. As described above, the nanogas solution is a homogeneous mixture of nanobubbles and water. In one instance, the nanogas solution is a nitrogen-nanogas solution and, preferably, the nitrogen-nanogas solution affects the viscosity of materials in the oil sands tailings. In another instance, the nanogas solution is an oxygen-nanogas solution and, preferably, oxidizes volatile materials in the oil sands tailings. In still another instance, the method includes admixing a second nanogas solution with the admixture of the nanogas solution and the oil sands tailings; wherein the nanogas solution is an oxygen-nanogas solution and the second nanogas solution is a nitrogen-nanogas solution.

In one example, a nanogas solution is directly added to the tailings, preferably directly added to a tailings pond. For example, the nanogas solution can be injected or added to the tailing by subsurface injection, that is, injection of the nanogas solution into the tailings below the surface of the tailings pond. Recognizing the enormity of tailings ponds (e.g., those associated with tar sands recovery) the nanogas solution can be poured, sprayed, or distributed over the pond. In another example, the nanogas solution is added to the tailings prior to the addition of the tailings to the ponds; that is, at the end of the hydrocarbon recovery process. Preferably, the nanogas solution is mixed with the tailings prior to addition of the tailings to the tailings pond. In yet another example, the nanogas solution can be mixed with tailings by pumping tailings from the tailings pond, admixing with the nanogas solution, and then returning the mixture to the tailings pond.

In a preferable example, the addition of the nanogas solution (e.g., a nitrogen-nanogas solution) to the tailings pond increases the rate of separation of the oils, water, and solids contained in the tailings. In another preferable example, the addition of a nanogas solution that includes oxygen (e.g., an oxygen-nanogas solution or an ON-nanogas solution) and oxidizes hydrogen sulfide and/or other oxidizable components of the tailings solution. In one example, the addition of an oxygen including nanogas solution additionally causes hydrocarbon materials to agglomerate and increase separation; in another example, the addition of a nitrogen nanogas solution separates and lightens the oil(s) and allows for more facile removal of the hydrocarbons from the surface of the tailings pond. Preferably, the addition of the nanogas solution increases the settling rate by a factor of 1.1, 1.2, 1.3, 1.4, 1.5, 1.6, 1.7, 1.8, 1.9, or 2.0. More preferably, the addition of the nanogas solution increases the settling rate by at least 2 times.

In a particular instance, the method can include admixing a nanogas solution with oil sands tailings and then separating materials including silts, residual bitumen, and organic compounds from water in the oil sands tailings. In this instance, the nanogas solution includes nitrogen nanobubbles, oxygen nanobubbles, carbon dioxide nanobubbles or a mixture thereof. In one case, the nanogas solution is a nitrogen-nanogas solution. In another case, the viscosity of oil in the tailings is reduced as an effect of the addition of the nanogas solution. In yet another case includes further admixing an oxygen-nanogas solution with the oil sands tailings; and oxidizing a sulfide. The process can includes admixing the nanogas solution with the tailings and then adding the admixture to a tailings pond; can include subservice injection and admixing of the nanogas solution and the tailings, for example the subsurface injection of the nanogas solution into tailings held in a tailings pond.

Also described is a method for oxidizing sulfides. In one instance this method can include admixing an oxygen-nanogas solution or an ON-nanogas solution with an aqueous solution that includes hydrogen sulfide and oxidizing the hydrogen sulfide. In another instance this method can include admixing an oxygen-nanogas solution or an ON-nanogas solution with a slurry of iron sulfide and water and oxidizing the iron sulfide to iron oxide.

## Claims

1. A process comprising:
shearing a first nanogas solution into an oil-in-water micro emulsion;
breaking the oil-in-water micro emulsion and forming a water-in-oil macro emulsion (106), a water phase (107), and a solids phase, where the water-in-oil macro emulsion (106) is carried on the water phase (107); and
collecting oil from the water-in-oil macro emulsion (106);
wherein the first nanogas solution consists essentially of a homogeneous mixture of nanobubbles and water.

2. The process of claim 1 wherein the solids phase precipitates out of the water phase (107).

3. The process of claim 1 further comprising separating the water phase (107) from the water-in-oil macro emulsion (106) and the solids phase; and using the separated water phase (107) to create a second nanogas solution.

4. The process of claim 1, wherein the first nanogas solution oxidizes emulsifiers in the oil-in-water micro emulsion to form an oil-in-water macro emulsion.

5. The process of claim 4, further comprising admixing a second nanogas solution with the oil-in-water macro emulsion, where the second nanogas solution comprises a nitrogen-nanogas solution; dissociating the emulsifiers from a surface of oil droplets in the oil-in-water macro emulsion; breaking the oil-in-water macro emulsion; and forming a second water-in-oil macro emulsion.

6. The process of claim 1, wherein the first nanogas solution comprises a nitrogen-nanogas solution; the process further comprising dissociating emulsifiers from a surface of oil droplets in the oil-in-water micro emulsion; and breaking the oil-in-water micro emulsion to form a second water-in-oil macro emulsion.

7. The process of claim 1, wherein the nanobubbles comprise oxygen, carbon dioxide, nitrogen or a mixture thereof.

8. The process of claim 1, wherein the nanobubbles comprise carbon dioxide; the process further comprising absorbing the carbon dioxide nanobubbles into an oil droplet in the water-in-oil macro emulsion (106); and reducing the density of the oil droplet.

9. The process of claim 1, wherein the first nanogas solution includes a sufficient quantity of oxygen nanobubbles to react with a concentration of sulfides in the oil-in-water micro emulsion, thereby reducing the sulfide concentration from greater than 50 ppm to less than 10 ppm.

10. The process of claim 1, wherein the water phase includes a concentration of sulfides from the oil-in-water micro emulsion, the process further comprising admixing a second nanogas solution with the water phase (107), wherein the second nanogas solution includes a sufficient quantity of oxygen nanobubbles to react with the concentration of sulfides, thereby reducing the sulfide concentration from greater than 50 ppm to less than 10 ppm.

11. The process of claim 1 further comprising creating a flow path of the oil-in-water micro emulsion; wherein the shearing step comprises injecting a stream of the first nanogas solution into the flow path of the oil-in-water micro emulsion.

12. The process of claim 11, wherein the stream of the first nanogas solution is injected into the flow path of the micro emulsion flow at a direction that is 90° to 180° from the flow path, preferably 115° to 180°, more preferably 135° to 180°.

13. The process of claim 1, wherein shearing the first nanogas solution into the oil-in-water micro emulsion includes admixing the first nanogas solution and the micro emulsion in a mixer; the process further including ejecting this admixture into a separation container.

14. The process of claim 1, wherein the nanobubbles have an average diameter of about 10 to 100 nm.

15. The process of claim 1, wherein the oil-in-water micro emulsion comprises oil sands tailings; the solids phase comprises silts, residual bitumen, or organic compounds; and the nanogas solution includes nitrogen nanobubbles, oxygen nanobubbles, carbon dioxide nanobubbles or a mixture thereof.

## Patentansprüche

1. Ein Verfahren umfassend :
Scheren einer ersten Nanogaslösung in eine Öl-in-Wasser-Mikroemulsion, die Öl-in-Wasser-Mikroemulsion bricht und eine Wasser-in-Öl-Makroemulsion (106), eine Wasserphase (107) und eine Feststoffphase bildet, wobei die Wasser-in-Öl-Makroemulsion (106) auf der Wasserphase (107) getragen wird; und
Sammeln von Öl aus der Wasser-in-Öl-Makroemulsion (106);
Wobei die erste Nanogaslösung im Wesentlichen aus einer homogenen Mischung von Nanoblasen und Wasser besteht.

2. Verfahren nach Anspruch 1, **dadurch gekennzeichnet, dass** die Feststoffphase aus der Wasserphase ausfällt (107).

3. Das Verfahren nach Anspruch 1, das ferner das Trennen der Wasserphase (107) von der Wasser-in-Öl-Makroemulsion (106) und der Feststoffphase umfasst; und Verwenden der abgetrennten Wasserphase (107), um eine zweite Nanogaslösung zu erzeugen.

4. Verfahren nach Anspruch 1, wobei die erste Nanogaslösung Emulgatoren in der Öl-in-Wasser-Mikroemulsion oxidiert, um eine Öl-in-Wasser-Makroemulsion zu bilden.

5. Verfahren nach Anspruch 4, ferner umfassend das Beimischen einer zweiten Nanogaslösung mit der Öl-in-Wasser-Makroemulsion, wobei die zweite Nanogaslösung eine Stickstoff-Nanogaslösung umfasst; Dissoziieren der Emulgatoren von einer Oberfläche von Öltröpfchen in der Öl-in-Wasser-Makroemulsion; Brechen der Öl-in-Wasser-Makroemulsion; und Bilden einer zweiten Wasser-in-Öl-Makroemulsion.

6. Verfahren nach Anspruch 1, wobei die erste Nanogaslösung eine Stickstoff-Nanogaslösung umfasst; wobei das Verfahren ferner das Dissoziieren von Emulgatoren von einer Oberfläche von Öltröpfchen in der Öl-in-Wasser-Mikroemulsion umfasst; und das Brechen der Öl-in-Wasser-Mikroemulsion, um eine zweite Wasser-in-Öl-Makroemulsion zu bilden.

7. Verfahren nach Anspruch 1, wobei die Nanoblasen Sauerstoff, Kohlendioxid, Stickstoff oder eine Mischung davon umfassen.

8. Verfahren nach Anspruch 1, wobei die Nanoblasen Kohlendioxid umfassen; wobei das Verfahren ferner das Absorbieren der Kohlendioxid-Nanoblasen in ein Öltröpfchen in der Wasser-in-Öl-Makroemulsion (106) umfasst; und Reduzieren der Dichte des Öltröpfchens.

9. Verfahren nach Anspruch 1, wobei die erste Nanogaslösung eine ausreichende Menge an Sauerstoff-Nanoblasen enthält, um mit einer Konzentration von Sulfiden in der Öl-in-Wasser-Mikroemulsion zu reagieren, wodurch die Sulfidkonzentration von mehr als 50 ppm auf weniger als 10 ppm reduziert wird.

10. Verfahren nach Anspruch 1, wobei die Wasserphase eine Konzentration von Sulfiden aus der Öl-in-Wasser-Mikroemulsion umfasst, wobei das Verfahren ferner das Beimischen einer zweiten Nanogaslösung mit der Wasserphase (107) umfasst, wobei die zweite Nanogaslösung eine ausreichende Menge an Sauerstoff-Nanoblasen enthält, um mit der Konzentration von Sulfiden zu reagieren, wodurch die Sulfidkonzentration von mehr als 50 ppm auf weniger als 10 ppm reduziert wird.

11. Das Verfahren nach Anspruch 1, das ferner das Erzeugen eines Strömungswegs der Öl-in-Wasser-Mikroemulsion umfasst; wobei der Scherschritt das Einspritzen eines Stroms der ersten Nanogaslösung in den Strömungsweg der Öl-in-Wasser-Mikroemulsion umfasst.

12. Verfahren nach Anspruch 11, wobei der Strom der ersten Nanogaslösung in den Strömungsweg der Mikroemulsionsströmung in einer Richtung eingespritzt wird, die 90° bis 180° von dem Strömungsweg, vorzugsweise 115° bis 180°, weiter bevorzugt 135° bis 180°, beträgt.

13. Verfahren nach Anspruch 1, wobei das Scheren der ersten Nanogaslösung in die Öl-in-Wasser-Mikroemulsion das Beimischen der ersten Nanogaslösung und der Mikroemulsion in einem Mischer umfasst; wobei das Verfahren ferner das Ausstossen dieser Mischung in einen Trennbehälter umfasst.

14. Verfahren nach Anspruch 1, **dadurch gekennzeichnet, dass** die Nanoblasen einen mittleren Durchmesser von etwa 10 bis 100 nm aufweisen.

15. Verfahren nach Anspruch 1, wobei die Öl-in-Wasser-Mikroemulsion Ölsanden umfasst; die Feststoffphase Silts, Restbitumen oder organische Verbindungen umfasst; und die Nanogastösung Stickstoff-Nanoblasen, Sauerstoffnanoblasen, Kohlendioxid-Nanoblasen oder eine Mischung davon umfasst.

## Revendications

1. Un processus comprenant :
le cisaillement d'une première solution de nanogaz dans une micro-émulsion huile-dans-eau brisant la micro-émulsion huile-dans-eau et formant une macro-émulsion eau-dans-huile (106), une phase eau (107) et une phase solide, où la macro-émulsion eau-dans-huile (106) est réalisée sur la phase eau (107) ; et la collecte d'huile à partir de la macro-émulsion eau dans huile (106) ; dans laquelle la solution de nanogaz consiste essentiellement en un mélange homogène de nanobulles et d'eau.

2. Procédé selon la revendication 1 dans lequel la phase des solides précipite hors de la phase hydrique (107).

3. Procédé selon la revendication 1 comprenant en outre la séparation de la phase eau (107) de la macro-émulsion eau-huile (106) et de la phase des solides ; et en utilisant la phase d'eau séparée (107) pour créer une deuxième solution de nanogaz.

4. Procédé selon la revendication 1, dans lequel la première solution de nanogaz oxyde les émulsifiants dans la micro-émulsion huile-dans-eau pour former une macro-émulsion huile-dans-eau.

5. Le procédé selon la revendication 4, comprenant en outre le mélange d'une deuxième solution de nanogaz avec la macro-émulsion huile-dans-eau, où la deuxième solution de nanogaz est une solution azote-nanogaz ; dissocier les émulsifiants d'une surface de gouttelettes d'huile dans la macro-émulsion huile-dans-eau ; briser l'émulsion huile-dans-eau ; et la formation d'une deuxième macro-émulsion eau-dans-huile.

6. Procédé selon la revendication 1, dans lequel la première solution de nanogaz comprend une solution azote-nanogaz ; le procédé comprenant en outre la dissociation des émulsifiants d'une surface de gouttelettes d'huile dans la micro-émulsion huile-dans-eau ; et casser l'émulsion huile-dans-eau pour former une deuxième macro-émulsion eau-dans-huile.

7. Procédé selon la revendication 1, dans lequel les nanobulles comprennent de l'oxygène, du dioxyde de carbone, de l'azote ou un mélange de ceux-ci.

8. La revendication de procédé 1, dans laquelle les nanobulles comprennent du dioxyde de carbone ; le procédé comprenant en outre l'absorption des nanobulles de dioxyde de carbone dans une gouttelette d'huile dans la macro-émulsion eau dans huile (106) ; et la réduction de la densité de la gouttelette d'huile.

9. Procédé selon la revendication 1, dans lequel la première solution de nanogaz comprend une quantité suffisante de nanobulles d'oxygène pour réagir avec une concentration de sulfures dans la micro-émulsion huile-dans-eau, réduisant ainsi la concentration de sulfures de 50 ppm à moins de 10 ppm.

10. Procédé selon la revendication 1, dans lequel la phase hydrique comprend une concentration de sulfures provenant de la micro-émulsion huile-dans-eau, le procédé comprenant en outre le mélange d'une deuxième solution de nanogaz avec la phase eau (107), dans lequel la deuxième solution de nanogaz comprend une quantité suffisante de nanobulles d'oxygène pour réagir avec la concentration de sulfures, réduisant ainsi la concentration de sulfures de plus de 50 ppm à moins de 10 ppm.

11. Le procédé selon la revendication 1 comprenant en outre la création d'une voie d'écoulement de la micro-émulsion huile-dans-eau ; dans lequel l'étape de cisaillement consiste à injecter un flux de la première solution de nanogaz dans le chemin d'écoulement de la micro-émulsion huile-dans-eau.

12. Procédé selon la revendication 11, dans lequel le flux de la première solution de nanogaz est injecté dans le trajet d'écoulement du flux de micro-émulsion dans une direction qui est de 90° à 180° du trajet d'écoulement, de préférence de 115° à 180°, plus préférentiellement de 135° à 180°.

13. Le procédé de la revendication 1, dans lequel le cisaillement de la première solution de nanogaz dans la micro-émulsion huile-dans-eau comprend le mélange de la première solution de nanogaz et de la micro-émulsion dans un mélangeur ; le processus, y compris l'éjection de ce mélange dans un récipient de séparation.

14. Procédé selon la revendication 1, dans lequel les nanobulles ont un diamètre moyen d'environ 10 à 100 nm.

15. Le procédé de la revendication 1, dans lequel la micro-émulsion huile-dans-eau comprend des résidus de sables bitumineux ; la phase solide comprend des limons, du bitume résiduel ou des composés organiques ; et la solution de nanogaz comprend des nanobulles d'azote, des nanobulles d'oxygène, des nanobulles de dioxyde de carbone ou un mélange de ceux-ci.
